(19) Europäisches Patentamt

European Patent Office

Office européen des brevets

(11) **EP 1 090 271 B1**

(12) **EUROPÄISCHE PATENTSCHRIFT**

(45) Veröffentlichungstag und Bekanntmachung des Hinweises auf die Patenterteilung:
**28.07.2004 Patentblatt 2004/31**

(21) Anmeldenummer: **99920612.1**

(22) Anmeldetag: **08.04.1999**

(51) Int Cl.$^7$: **G01C 19/56**

(86) Internationale Anmeldenummer:
**PCT/EP1999/002389**

(87) Internationale Veröffentlichungsnummer:
**WO 1999/067597 (29.12.1999 Gazette 1999/52)**

(54) **MIKROMECHANISCHER DREHRATENSENSOR**

MICROMECHANICAL RPM SENSOR

CAPTEUR DE VITESSE DE ROTATION MICROMECANIQUE

(84) Benannte Vertragsstaaten:
**FR GB**

(30) Priorität: **25.06.1998 DE 19828424**

(43) Veröffentlichungstag der Anmeldung:
**11.04.2001 Patentblatt 2001/15**

(73) Patentinhaber: **LITEF GmbH**
**79115 Freiburg (DE)**

(72) Erfinder:
• **BRENG, Uwe**
**D-79194 Gundelfingen (DE)**
• **HAFEN, Martin**
**D-78628 Rottweil (DE)**
• **HANDRICH, Eberhard**
**D-79199 Kirchzarten (DE)**
• **RYRKO, Bruno**
**D-79211 Denzlingen (DE)**

(74) Vertreter: **Müller, Frithjof E., Dipl.-Ing.**
**Müller Hoffmann & Partner**
**Patentanwälte**
**Innere Wiener Strasse 17**
**81667 München (DE)**

(56) Entgegenhaltungen:
**WO-A-96/38710** **DE-C- 19 635 923**

## Beschreibung

Die Erfindung betrifft einen mikromechanischen Drehratensensor basierend auf dem Coriolis-Prinzip mit zwei in zwei parallelen Ebenen schichtartig übereinander angeordneten und über einen elektrostatischen Antrieb zu Schwingungen senkrecht zu den Ebenen anregbaren plattenförmigen Schwingern.

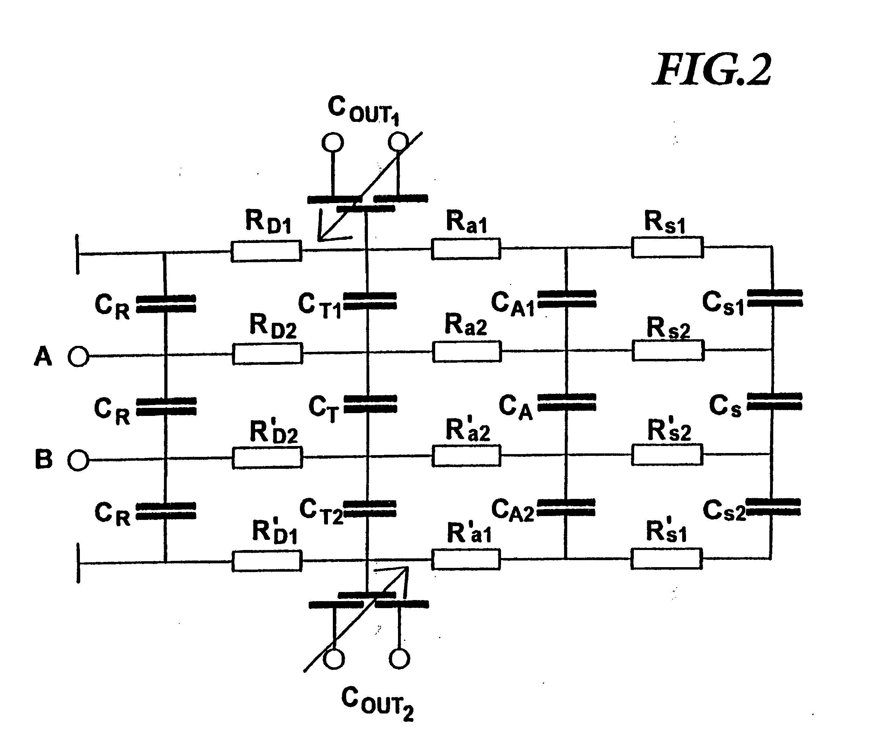

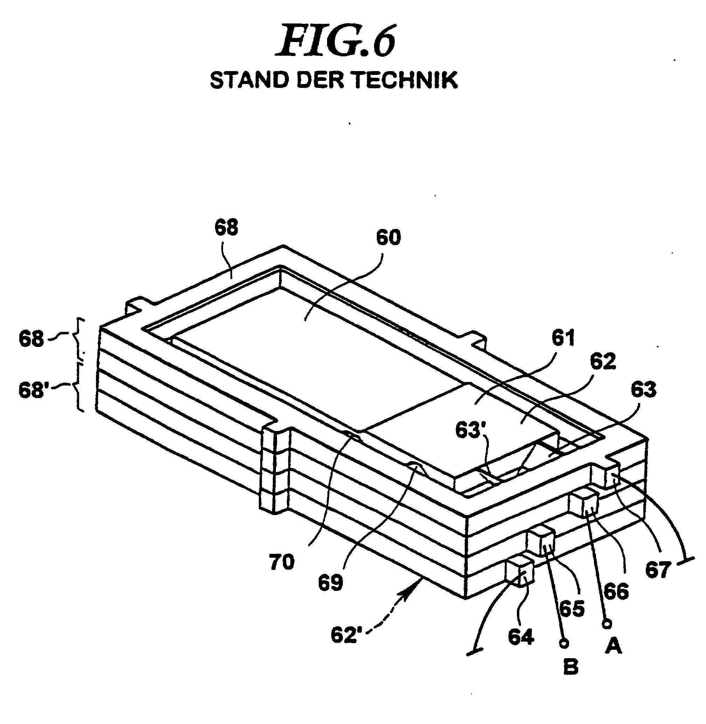

Ein mikromechanischer Drehratensensor mit den oben angegebenen Merkmalen ist in der internationalen Patentanmeldung Veröffentlichungsnummer WO 96/38710 ausführlich beschrieben; auf diese Druckschrift wird voll inhaltlich Bezug genommen. Fig. 6 der beigefügten Zeichnungen veranschaulicht diesen Stand der Technik (vergleiche auch Fig. 9 der genannten WO-Druckschrift). Wie oben angegeben umfaßt ein solcher Drehratensensor zwei fluchtend, schichtartig übereinander angeordnete Schwinger von denen in der Perspektivdarstellung der Fig. 6 der obere Schwinger 60 sichtbar ist. Dieser Schwinger 60 und entsprechend auch die untere spiegelsymmetrisch angeordnete und nicht sichtbare Schwingeranordnung ist über eine erste Feder 70 an einen elektrostatischen plattenförmigen Antrieb 61 angelenkt, der seinerseits über eine zweite Feder 69 mit einem plattenförmigen Träger 62 verbunden ist. Die ganze reihenartig verbundene Anordnung aus Schwinger 60, Antrieb 61 und Träger 62 ist über ein Kreuzfedergelenk 63, 63' in einem Rahmen 68 gehalten. Es ist aus Fig. 6 ersichtlich, daß jede Schwingeranordnung 60. 61, 62 einschließlich des zugehörigen Rahmens 68 zweilagig, also aus einem Verbundwafer unter Zwischenschaltung einer nicht dargestellten dünnen Isolationsschicht, beispielsweise aus SiO$_2$, hergestellt ist. Der obere zweilagige Rahmen 68 und der untere zweilagige Rahmen 68' umschließen also die gesamte aus vier Waferschichten hergestellte Schwingerstruktur, wobei über äußere Rahmenanschlüsse 64 bis 67 unterschiedliche Potentiale zuführbar sind. Mit Durchführungen für die elektrostatische (kapazitive) Anregung, Signalauslesung und Rückstellung (im Falle eines Closed-Loop-Systems) versehene Deck- und Bodenwafer sind in Fig. 6 nicht gezeigt; es wird insoweit auf Fig. 2 der genannten WO-Druckschrift verwiesen. Der besondere Vorteil dieser zweilagigen Schwingerstruktur nach Fig. 6 besteht unter anderem darin, daß Störungen der Meßwerte durch Reaktionskräfte aufgrund von Schwingerbewegungen nicht auftreten, obwohl vergleichsweise große Schwingungsamplituden des Schwingers 60 mit kleinen Kondensatorantriebsspalten im Bereich des Antriebs 61 realisierbar sind. Die Drehratenauslesung erfolgt ebenfalls kapazitiv über (nicht gezeigte) Flächenelektroden auf der Oberseite des Trägers 62 bzw. auf der Unterseite des spiegelbildlichen (hier nicht sichtbaren unteren) Trägers 62' mit entsprechenden Gegenelektroden am (nicht gezeigten) Deck- bzw. Bodenwafer. Das dargestellte Kreuzfedergelenk 63, 63' hat den Vorteil, daß rotatorische, durch Corioliskräfte verursachte Bewegungen und damit Kapazitätsänderungen gut übertragen, dagegen horizontale und vertikale Schwingungen in diesem Bereich unterdrückt werden.

Bei der anhand der Fig. 6 erläuterten Schwingerstruktur ist die elektrostatische Anregung aufgrund des engen Antriebsspalts im Bereich des Antriebs 61 trotz erwünschter relativ großer Schwingungsamplituden erheblich erleichtert und mit vergleichsweise niedrigen Antriebsspannungen von wenigen Volt realisierbar. Die galvanische Trennung von Anregung und Auslesung ist durch gezielte Anwendung von Siliziumdioxidschichten auch gut zu erreichen. Für sehr niedrige Drehraten bedeutet aber die kapazitive Kopplung zusammen mit den technologisch nur schwer zu unterschreitenden elektrischen Widerständen der Federn 63, 69, 70 eine mögliche Einkopplung von Störsignalen, die deutlich größer sind als das zu messende Signal, so daß die Erkennung und Trennung des Drehratensignals hohe Anforderungen an den elektrischen Aufwand stellen.

Ausgehend von dem soweit beschriebenen Stand der Technik liegt der Erfindung damit die Aufgabe zugrunde, die elektrodynamische Kopplung zwischen dem elektrostatischen Antrieb und der Drehratenauslesung oder dem Drehratenausgang erheblich zu reduzieren.

Die erfindungsgemäße Lösung ist ausgehend von einer Schwingerstruktur, wie sie exemplarisch anhand der Fig. 6 erläutert wurde, für einen mikromechanischen Drehratensensor mit den oben genannten Merkmalen dadurch gekennzeichnet, daß die Schwinger an gegenüberliegenden Seitenkanten über mindestens einen schmalen Steg jeweils zwischen einem zugeordneten plattenartigen Träger einerseits und einem zugeordneten Antriebsplattenelement des elektrostatischen Antriebs andererseits aufgehängt sind, wobei die beiden Träger einerseits und die beiden Antriebsplattenelemente andererseits, jeweils schichtartig übereinander auf Abstand stehen, und wobei zwischen den beiden Antriebsplattenelementen ein feststehendes Plattenelement eingesetzt ist, derart, daß zu den beiden Antriebsplattenelementen ein jeweils gleicher schmaler Antriebsspalt festgelegt ist, der wesentlich geringer ist als der gegenseitige Abstand der beiden Schwinger. Unter "schmalem Steg" wird eine mikromechanische flexible Verbindung, insbesondere eine Feder, z.B. eine Biegefeder verstanden, deren Breite in Richtung der zugeordneten Ebene wesentlich geringer ist als die Breite der verbundenen Teile, also beispielsweise wesentlich schmäler als der zugeordnete Schwinger einerseits und das entsprechende Antriebsplattenelement andererseits.

Vorzugsweise ist zwischen den beiden plattenartigen Trägern ein den Zwischenraum ausfüllender Zwischenträger eingesetzt, der keine seitliche Verbindung zu einem umgebenden Rahmen aufweist. Die Antriebsplattenelemente einerseits und die plattenartigen Träger andererseits weisen vorzugsweise jeweils paarweise gleiche Flächengrößen auf.

In aller Regel wird jeweils ein Schwinger mit zugeordnetem Träger und Antriebsplattenelement innerhalb eines umgebenden Rahmens über schmale Stege gehalten, wobei die gesamte so gebildete Struktur einer Schicht aus jeweils einem Wafer hergestellt ist. Insgesamt wird dann die gesamte Schwingerstruktur - ohne Deck- und Bodenplatte - aus einem dreilagigem Waferschichtverbund mit einer oberen und einer unteren Schichtstruktur ausgebildet sein, die jeweils, umgeben von einem gleichartigen Rahmen, einen Träger, einen Schwinger und ein Antriebsplattenelement aufweisen, während in der dritten dazwischenliegenden Schichtstruktur innerhalb eines gleichartigen Rahmens einerseits, mit dem Rahmen verbunden, das zwischen den beiden Antriebsplattenelementen stehende Plattenelement und andererseits, ohne mechanische Verbindung zum Rahmen, der den Zwischenraum zwischen den Trägern ausfüllende Zwischenträger ausgebildet sind.

Die Erfindung und vorteilhafte Einzelheiten werden nachfolgend mit Bezug auf ein Ausführungsbeispiel näher erläutert. Es zeigen:

Fig. 1    die Explosionsdarstellung einer Schwingerstruktur für einen mikromechanischen Drehratensensor gemäß der Erfindung;

Fig. 2    das elektrische Ersatzschaltbild für einen bekannten mikromechanischen Drehratensensor, beispielsweise den nach Fig. 6;

Fig. 3    das elektrische Ersatzschaltbild für einen mikromechanischen Drehratensensor gemäß der Erfindung;

Fig. 4    die schematische Reihen-/Parallelanordnung der bekannten Schwingerstruktur (beispielsweise nach Fig. 6) zur Veranschaulichung des Ersatzschaltbildes nach Fig. 2;

Fig. 5    die Reihen-/Parallelanordnung einer erfindungsgemäßen Schwingerstruktur nach Fig. 1 zur Veranschaulichung des Ersatzschaltbildes nach Fig. 3; und

Fig. 6    die bereits erläuterte Schwingerstruktur für einen mikromechanischen Drehratensensor nach dem Stand der Technik gemäß WO 96/38710.

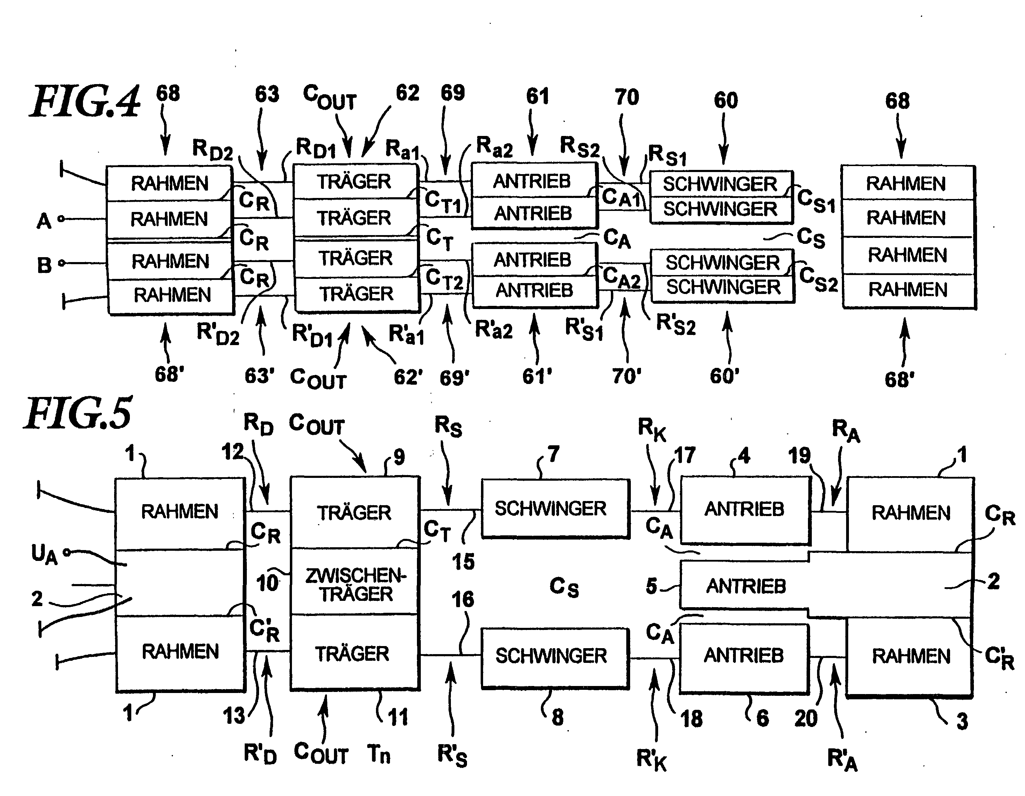

Als Ansatz für eine Lösung des der Erfindung zugrundeliegenden technischen Problems, nämlich die elektrodynamische Kopplung zwischen dem Antrieb und der Drehratenauslesung zu reduzieren, werden zunächst die elektrisch verkoppelten physikalischen Größen, nämlich Kapazitäten und Widerstände anhand des schematischen Bildes der Fig. 4 untersucht, wobei mit Bezug auf die obige Erläuterung des Standes der Technik nach Fig. 6 durch die Angabe gleicher Bezugshinweise die im einzelnen zu berücksichtigenden Elemente dargestellt sind, nämlich die Rahmen 68, 68', das Kreuzfedergelenk 63, 63', die Träger 62, 62', die (Biege-)federn 69, 69', der plattenförmige Antrieb 61, 61', die (Biege-)federgelenke 70, 70', und die einseitig angelenkten Schwinger 60, 60'. In die Fig. 4 sind ergänzend und symbolisch die zu berücksichtigenden ohmschen Widerstände eingetragen, nämlich insbesondere die Widerstände $R_{D1}$, $R_{D2}$, $R'_{D1}$, $R'_{D2}$ der Drehfedern bzw. des Kreuzgelenks 63 zwischen oberem Rahmen 68 und unterem Rahmen 68' zum jeweils zugeordneten Träger 62, 62', die ohmschen Widerstände $R_{a1}$, $R_{a2}$, $R'_{a1}$, $R'_{a2}$ zwischen dem jeweiligen Träger 62, 62' und dem jeweiligen Plattenantriebselement 61, 61' sowie die ohmschen Widerstände $R_{s1}$, $R_{s2}$, $R'_{s1}$, $R'_{s2}$ zwischen dem jeweiligen Plattenantriebselement 61, 61' und dem jeweils zugeordneten Schwinger 60, 60'. Andererseits sind - ebenfalls in Fig. 4 - die zu berücksichtigenden Kapazitäten, nämlich einmal die (etwa gleichen) Kapazitätswerte $C_R$ zwischen den einzelnen Schichten des Rahmens 68, 68', die Kapazitäten $C_T$ bzw. $C_{T1}$, $C_{T2}$ zwischen den einzelnen Schichten der Träger 62, 62', sodann die Kapazitäten $C_A$ bzw. $C_{A1}$, $C_{A2}$ zwischen den Schichten der Antriebsplattenelemente 61, 61' und schließlich die Kapazitäten $C_s$ bzw. $C_{s1}$, $C_{s2}$ zwischen den plattenförmigen Schwingern 60, 60' bzw. den diese bildenden Schichtverbundwafern.

Das elektrische Ersatzschaltbild der Fig. 2 veranschaulicht die anhand der Fig. 4 erläuterte Vernetzung elektrischer Größen bezogen auf den Stand der Technik bei der Schwingerstruktur nach Fig. 6. Die Auslesekapazitäten im Bereich der beiden Elemente des Trägers 62 sind mit $C_{out1}$ bzw. $C_{out2}$ wiedergegeben. Wie die Fig. 2 erkennen läßt, fließen die Ladeströme für die Kapazitäten $C_T$, $C_A$, $C_S$ bzw. $C_{T1}$, $C_{A1}$, $C_{s1}$ sowie $C_{T2}$, $CA_2$, $C_{s2}$ über die Widerstände der Drehfedern, also das Kreuzfedergelenk 63, die mit $R_{D1}$ bzw. $R_{D2}$ bezeichnet sind. An den genannten Kapazitäten entstehen entsprechende Spannungsabfälle. An den Ausgängen des Drehratenabgriffs $C_{out1}$ und $C_{out2}$ wird das Differenzsignal für die Drehrate ausgelesen. Zwar besitzen die angeschlossenen Verstärker (nicht dargestellt; vergleiche jedoch Fig. 2 von WO 96/38710) eine Gleichtaktunterdrückung. Trotzdem stören große Störsignale die Verarbeitung kleiner Drehraten mit entsprechend kleinen Signalgrößen erheblich, so daß der Dynamikbereich des Drehratensensors beschränkt ist.

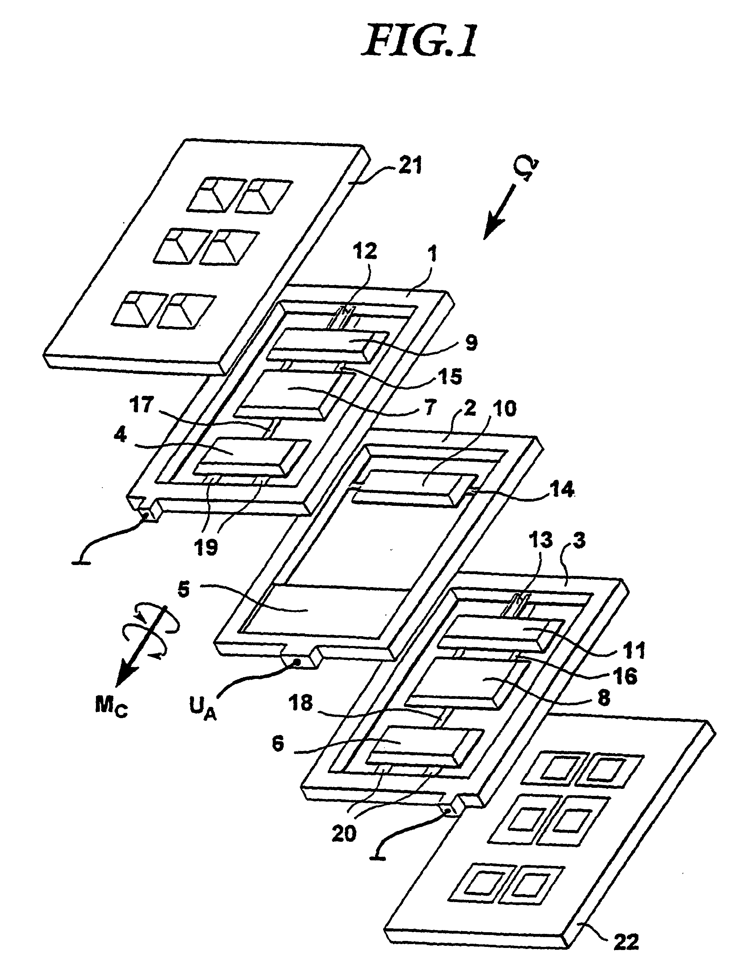

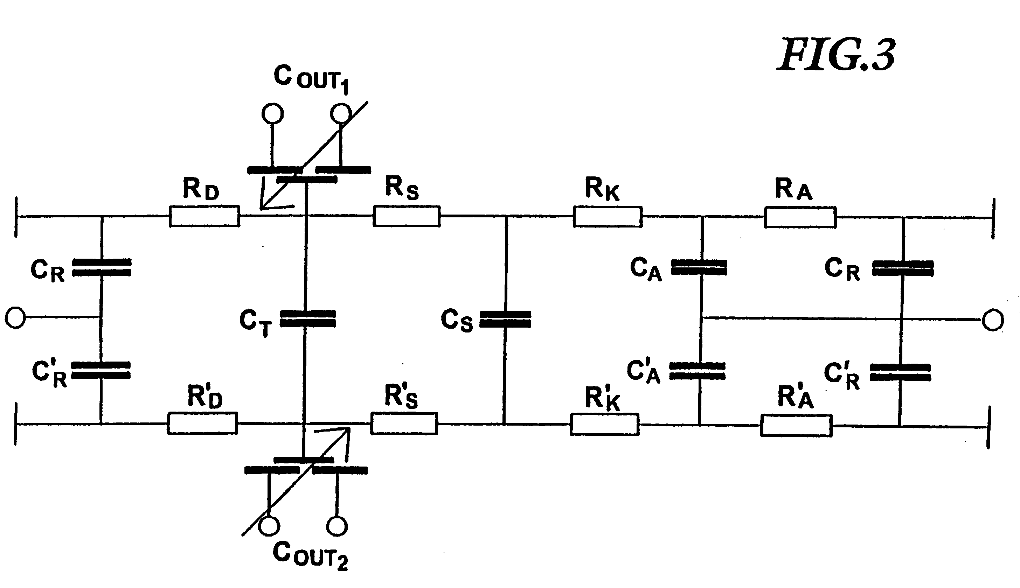

Aufgrund der konstruktiven Änderung der Schwingerstruktur des Drehratensensors gemäß der Erfindung, die nachfolgend anhand der Fig. 1 sowie mit Bezug auf die schematische Darstellung der Fig. 5 und hinsichtlich des entsprechenden Ersatzschaltbildes anhand der Fig. 3 erläutert wird, wird eine erhebliche Reduzierung der gegenseitigen elektrodynamischen Verkopplung zwischen dem Antrieb und der Drehratenauslesung erreicht.

Die Fig. 1 läßt einen dreilagigen Schichtaufbau für die Schwingerstruktur eines erfindungsgemäßen mikromechanischen Drehratensensors erkennen, wobei auf eine Deckplatte 21 bzw. eine Bodenplatte 22 nicht näher eingegangen wird; es wird insoweit auf die Erläuterung zu Fig. 2 der genannten WO-Druckschrift hingewiesen. Die einzelnen Schichten der dreilagigen Schwingerstruktur weisen jeweils einen Rahmen 1, 2 bzw. 3 auf. Innerhalb des Rahmens 1 des Wafers der oberen Schwingerstruktur bzw. innerhalb des Rahmens 3 des Wafers der unteren Schwingerstruktur erkennt man, angelenkt über (Biege-)federn 19 bzw. 20 ein oberes bzw. unteres Plattenantriebselement 4 bzw. 6, zwischen denen sich durch schmale Antriebsspalte begrenzt, ein mit dem mittleren Rahmen 2 einstückig verbundenes Plattenantriebselement 5 befindet, über das bei Anlegen einer Antriebsspannung $U_A$ der elektrostatische Antrieb erfolgt. Die Antriebsplattenelemente 4, 6 sind über schmale Federstege 17 bzw. 18 auf plattenförmige Schwinger 7 bzw. 8 gekoppelt, zwischen denen ein relativ großer Abstand besteht, so daß vergleichsweise große Schwingungsamplituden bei kleinen Antriebsspalten realisiert sind. Die plattenförmigen Schwinger 7 bzw. 8 sind auf der den Federstegen 17 bzw. 18 gegenüberliegenden Seite im dargestellten Beispiel über jeweils zwei Federstege 15 bzw. 16 mit einem hier als Träger 9 bzw. 11 bezeichneten plattenförmigen Element verbunden, über welche die Drehratenauslesung erfolgt. Diese Träger 9 bzw. 11 sind über beispielsweise als Kreuzfedergelenk verwirklichte Drehfedern 12 bzw. 13 auf den Rahmen 1 bzw. 3 gekoppelt. Werden die beiden Schwinger 7 bzw. 8 gegenphasig zu Schwingungen erregt, so werden unter der Einwirkung einer Drehung Ω um die jeweilige Drehfederachse Coriolis-Beschleunigungen erzeugt, die ein Wechselmoment $M_C$ um die Drehfederachse bewirken.

Gemäß einer vorteilhaften Ausführungsvariante der Erfindung, die erheblich zur Kapazitätsverminderung beiträgt, sind der obere Träger 9 und der untere Träger 11 mechanisch über ein dazwischenliegendes Trägerteil 10 verbunden, das zunächst, nämlich bei der Herstellung, wie dargestellt, mit den umgebenden Rahmen 2 über Stege 14 verbunden ist, die jedoch nach dem Verbonden der einzelnen Waferschichten getrennt werden. Dadurch werden Einkopplungen der Antriebsspannung $U_A$ in den Auslesekreisen $C_{out1}$ bzw. $C_{out2}$ vermieden.

Eine Schwingerstruktur gemäß Fig. 1 besitzt also die Vorteile, die sich aus sehr geringen Antriebsspalten ergeben, ermöglicht große Schwingungsamplituden, vermeidet aber andererseits die bisher unvermeidliche starke Verkopplung zwischen den Antriebsspannungen und dem Auslesekreis. Hier wirkt sich vorteilhaft aus, daß nur die Mittelstruktur über den Rahmen 2 elektrisches Anregungspotential erhält und die Trägerstruktur bestehend aus dem oberen Träger 9 und dem unteren Träger 11 mit dazwischenliegendem, vom umgebenden Rahmen getrennten (Hilfs-)Träger oder Zwischenträger 10 mechanisch stark entkoppelt ist, während die die Schwinger 7 bzw. 8 enthaltenden Waferschichten auf Massepotential liegen.

Betrachtet man jetzt das zugehörige elektrische Ersatzschaltbild gemäß Fig. 3, so ist die Entkopplung evident. Hier wirkt sich vor allem aus, daß die Kapazitäten zwischen dem Träger 9 und dem Zwischenträger 10 bzw. zwischen dem Träger 11 und dem Zwischenträger 10 nicht mehr durch das Potential an der mittleren Waferschicht aufgeladen werden können. Zwar ist aufgrund des Herstellungsprozesses zwischen den Trägern 9 und 10 bzw. den Trägern 11 und 10 eine Isolationsschicht vorhanden, die jedoch für die Funktion ohne Bedeutung ist.

Wie sich aus der Fig. 1 bzw. der Fig. 5 ersehen läßt, sind die Träger 9, 10, 11 flächenbündig aufeinander ausgerichtet und das auf Antriebspotential $U_A$ liegende mittlere Antriebsplattenelement 5 des elektrostatischen Antriebs reicht in seiner Längserstreckung innerhalb des Rahmens 2 bis zu den Vorderkanten der Antriebsplattenelemente 4 bzw. 6.

Vergleicht man nun die elektrischen Ersatzschaltbilder der Figuren 2 und 3, so fällt hinsichtlich der Erfindung bei Fig. 3 die erhebliche Verringerung der wirksamen Kapazitäten zwischen den potentialführenden Platten, also insbesondere zwischen dem Antriebsplattenelement 5 und den Referenzmassen mit Bezug auf die Auslesung auf. Während bei Fig. 2 die Kondensatoren $C_{T1}$, $C_T$, $C_{T2}$, $C_{A1}$, $C_A$, $C_{A2}$ sowie die Kondensatoren $C_{s1}$, $C_s$, $C_{s2}$, also die Kondensatoren, die durch die Fläche des Trägers bzw. des Antriebs bzw. des Schwingers und durch die Stärke der dazwischenliegenden $SiO_2$-Schichten bzw. des Antriebsspalts und Schwingspalts gegeben sind, wobei die Ladung über die Widerstände $R_{D1}$, $R'_{D1}$ bzw. $R_{D2}$, $R'_{D2}$ erfolgt und der an diesen Widerständen erzeugte Spannungsabfall in den Ausgangskreis einkoppelt und der Ausgangsspannung überlagert ist, so ergibt sich gemäß der Erfindung (siehe Fig. 3), daß nur noch die wesentlich kleineren Kondensatoren $C_S$ bzw. $C_A$, $C'_A$ über die Widerstände $R_A$, $R'_A$ geladen werden. Ferner wird nur der wesentlich kleinere Spannungsabfall am Widerstand $R_A$, $R'_A$ entsprechend dem Spannungsteiler

$$\frac{R_D}{R_D + R_S + P_K}$$

wirksam.

Die Störspannung wird also erheblich reduziert, und zwar - wie es sich auch aufgrund von Versuchungen bestätigen ließ - in der Größenordnung des Faktors 100.

Entscheidend für die Reduzierung des Einflusses der Störkapazitäten bei der Erfindung gegenüber dem Stand der Technik ist

- die durch die geänderte Anregung wesentlich verringerte Fläche der Streukapazitäten;
- die Beseitigung der Verbindung des mittleren Zwischenträgers 10 zum Rahmen 2; und

- die durch die geänderte Anordnung von Antriebsschwinger und Träger bewirkte Änderung der Spannungsteilung der Störspannung.

## Patentansprüche

1. Mikromechanischer Drehratensensor basierend auf dem Coriolis-Prinzip mit zwei in zwei Ebenen schichtartig übereinander angeordneten und über einen elektrostatischen Antrieb (4, 5, 6) zu Schwingungen senkrecht zu den Ebenen anregbaren plattenförmigen Schwingern (7, 8), **dadurch gekennzeichnet, daß** die Schwinger (7, 8) in Richtung der Drehachse an gegenüberliegenden Seitenkanten über jeweils mindestens einen schmalen Federsteg (17, 18 bzw. 15, 16) jeweils zwischen einem zugeordneten in der gleichen Ebene liegenden plattenartigen Träger (9, 11) einerseits, über den die Signalauslesung erfolgt, und einem ebenfalls in der gleichen Ebene liegenden zugeordneten Antriebsplattenelement (4, 6) des elektrostatischen Antriebs (4, 5, 6) andererseits aufgehängt sind, wobei die beiden Träger (9, 11) einerseits und die beiden Antriebs-plattenelemente (4, 6) andererseits jeweils schichtartig übereinander auf Abstand stehen, und wobei zwischen den beiden Antriebsplattenelementen (4, 6) ein feststehendes Plattenelement (5) eingesetzt ist, derart, daß zu den beiden Antriebsplattenelementen (4 bzw. 6) jeweils ein schmaler Antriebsspalt festgelegt ist, der wesentlich kleiner ist als der Abstand zwischen den Schwingern (7, 8).

2. Mikromechanischer Drehratensensor nach Anspruch 1, **dadurch gekennzeichnet, daß** zwischen den beiden plattenartigen Trägern (9, 11) ein den Zwischenraum ausfüllender Zwischenträger (10) eingesetzt ist.

3. Mikromechanischer Drehratensensor nach Anspruch 1 oder 2, **dadurch gekennzeichnet, daß** die Antriebsplattenelemente (4, 6) einerseits und die plattenartigen Träger (9, 11) andererseits jeweils paarweise gleiche Flächengrößen aufweisen.

4. Mikromechanischer Drehratensensor nach einem der vorstehenden Ansprüche, **dadurch gekennzeichnet, daß** jeweils ein Schwinger (7 bzw. 8) mit zugeordnetem Träger (9 bzw. 11) und Antriebsplattenelement (4 bzw. 6) innerhalb eines umgebenden Rahmens (1 bzw. 3) über die Federstege (17, 18 bzw. 15, 16) gehalten ist, wobei die gesamte so gebildete Struktur aus jeweils einem Wafer hergestellt ist.

5. Mikromechanischer Drehratensensor nach Anspruch 4, bestehend aus einem dreilagigen Waferschichtverbund mit einer oberen und einer unteren Schichtstruktur, in der jeweils umgeben von einem gleichartigen Rahmen (1 bzw. 3) ein Träger (9 bzw. 11), ein Schwinger (7 bzw. 8) und ein Antriebsplattenelement (4, 6) ausgebildet sind, während in der dritten dazwischenliegenden Schichtstruktur innerhalb eines gleichartigen Rahmens (2) einerseits, mit diesem Rahmen verbunden, das zwischen den beiden Antriebs-plattenelementen (4 bzw. 6) stehende Plattenelement (5) und andererseits, ohne mechanische Verbindung zu diesem Rahmen (2), der den Zwischenraum zwischen den Trägern (9 bzw. 11) ausfüllende Zwischenträger (10) ausgebildet sind.

6. Mikromechanischer Drehratensensor nach Anspruch 5, **dadurch gekennzeichnet, daß** der Zwischenträger (10) in Richtung zu den beiden Trägern (9 bzw. 11) bündig mit diesen abschließt, so daß keine Flächenüberlappung mit den übereinanderstehenden Schwingern (7 bzw. 8) besteht.

7. Mikromechanischer Drehratensensor nach einem der vorstehenden Ansprüche, **dadurch gekennzeichnet, daß** die Träger (9, 11) über eine Drehfeder, vorzugsweise ausgeführt als Kreuzfedergelenk, mit den zugehörigen Rahmen (1 bzw. 3) verbunden sind.

8. Mikromechanischer Drehratensensor nach einem der vorstehenden Ansprüche, **dadurch gekennzeichnet, daß** die Antriebsplattenelemente (4 bzw. 6) über Biegefedern (19 bzw. 20) mit dem jeweils zugeordneten Rahmen (1 bzw. 3) verbunden sind.

9. Mikromechanischer Drehratensensor nach Anspruch 7 bzw. 8, **dadurch gekennzeichnet, daß** die Schwinger (7 bzw. 8) jeweils über Federstege (15, 17 bzw. 16, 18) mit dem jeweils zugeordneten Träger (9 bzw. 11) auf der einen und mit dem jeweils zugeordneten Plattenantriebselement (4 bzw. 6) auf der anderen Seite verbunden sind.

## Claims

1. Micromechanical rotation rate sensor based on the Coriolis principle having two oscillators (7, 8) which are arranged one above the other like layers, in two planes, can be excited to oscillate at right-angles to the planes via an electrostatic drive (4, 5, 6) and are in the form of plates, **characterized in that** the oscillators (7, 8) are suspended in the direction of the rotation axis on opposite side edges via in each case at least one narrow spring web (17, 18 and 15, 16 respectively) in each case between an associated plate-like support (9, 11), lying in the same plane, on the one hand and via which the signals are read out, and an associated drive plate element (4, 6), likewise lying in the same plane, of the electrostatic drive (4, 5, 6) on the other hand, with the two supports (9 11) on the one hand and the two drive plate elements (4, 6) on the other hand in each case being spaced apart, one above the other, like layers, with a fixed plate element (5) being inserted between the two drive plate elements (4, 6) in such a manner that a narrow drive gap is in each case defined to the two drive plate elements (4 and 6, respectively), which drive gap is considerably smaller than the distance between the oscillators (7, 8).

2. Micromechanical rotation rate sensor according to Claim 1, **characterized in that** an intermediate support (10), which fills the intermediate space, is inserted between the two plate-like supports (9, 11).

3. Micromechanical rotation rate sensor according to Claim 1 or 2, **characterized in that** the drive plate element (4, 6) on the one hand and the plate-like support (9, 11) on the other hand each have identical surface areas, in pairs.

4. Micromechanical rotation rate sensor according to one of the preceding claims, **characterized in that** a respective oscillator (7 or 8) with the associated support (9 or 11, respectively) and drive plate element (4 or 6, respectively) is held within a surrounding frame ( 1 or 3, respectively) via the spring webs (17, 18 or 15, 16, respectively), with the entire structure formed in this way in each case being produced from a wafer.

5. Micromechanical rotation rate sensor according to Claim 4, comprising a three-layer wafer layer composite with an upper and a lower layer structure in which, in each case surrounded by an identical frame (1 or 3, respectively), a support (9 or 11, respectively), an oscillator (7 or 8, respectively) and a drive plate element (4, 6) are formed, while, on the one hand, the plate-element (5), which is positioned between the two drive plate elements (4 and 6, respectively) and is connected to an identical frame (2), and, on the other hand, the intermediate support (10) which fills the space in between the supports (9 and 11, respectively) but is not mechanically connected to this frame (2) are formed in the third interposed layer structure within said identical frame (2).

6. Micromechanical rotation rate sensor according to Claim 5, **characterized in that**, in the direction of the two supports (9 and 11, respectively), the intermediate support (10) ends flush with these two supports, so that there is no overlapping area with the oscillators (7 and 8, respectively) one above the other.

7. Micromechanical rotation rate sensor according to one of the preceding claims, **characterized in that** the supports (9, 11) are connected to the associated frames (1 and 3, respectively) via a torsion spring, preferably in the form of a cross spring joint.

8. Micromechanical rotation rate sensor according to one of the preceding claims, **characterized in that** the drive plate elements (4 and 6, respectively) are connected to the respectively associated frames (1 and 3, respectively) via spiral springs (19 and 20, respectively).

9. Micromechanical rotation rate sensor according to Claim 7 or 8, **characterized in that** the oscillators (7 and 8, respectively) are in each case connected via spring webs (15, 17 and 16, 18, respectively) to the respectively associated support (9 or 11, respectively) on the one side, and to the respectively associated plate drive element (4 or 6, respectively) on the other side.

## Revendications

1. Capteur micromécanique de vitesse de rotation fonctionnant selon le principe de Coriolis, avec deux oscillateurs formant plaques (7, 8) superposés par couches dans deux plans et excitables par l'intermédiaire d'une commande électrostatique (4, 5, 6) pour produire des oscillations perpendiculaires aux plans, **caractérisé en ce que** chacun des oscillateurs (7, 8) est suspendu dans la direction de l'axe de rotation, au niveau de bords latéraux opposés, par l'intermédiaire d'au moins un pont élastique étroit (17, 18, respectivement 15, 16) entre, d'une part, un support en forme de plaque associé (9, 11) disposé dans le même plan et servant à la lecture du signal et, d'autre part, un élément d'entraînement en forme de plaque associé (4, 6) de la commande électrostatique (4, 5, 6) disposé dans le même plan, les deux supports (9, 11) d'une part, et les deux éléments d'entraînement en forme de plaques (4, 6), d'autre part, étant respectivement superposés sous forme de couches distantes, et entre les deux éléments d'entraînement en forme de plaques (4, 6) étant intercalé un élément fixe en forme de plaque (5), de façon à créer, avec chacun des deux éléments d'entraînement en forme de plaques (4, respectivement 6), un interstice de commande étroit qui est nettement plus petit que la distance entre les oscillateurs (7, 8).

2. Capteur micromécanique de vitesse de rotation selon la revendication 1, **caractérisé en ce qu'**entre les deux supports en forme de plaque (9, 11) est intercalé un support intermédiaire (10) qui comble l'intervalle.

**3.** Capteur micromécanique de vitesse de rotation selon la revendication 1 ou 2, **caractérisé en ce que**, d'une part, les éléments d'entraînement en forme de plaques (4, 6) et, d'autre part, les supports en forme de plaques (9, 11) présentent des dimensions de surface égales par paires.

**4.** Capteur micromécanique de vitesse de rotation selon une des revendications précédentes, **caractérisé en ce que** chaque oscillateur (7, respectivement 8) avec le support (9, respectivement 11) et l'élément d'entraînement en forme de plaque (4, respectivement 6) associés est maintenu à l'intérieur d'un cadre d'entourage (1, respectivement 3) par l'intermédiaire des ponts élastiques (17, 18, respectivement 15, 16), chaque structure complète ainsi formée étant réalisée à partir d'une tranche de semi-conducteur.

**5.** Capteur micromécanique de vitesse de rotation selon la revendication 4, constitué d'un composite multicouche de tranche à trois couches avec des structures de couche supérieure et inférieure, dans chacune desquelles sont disposés un support (9, respectivement 11), un oscillateur (7, respectivement 8) et un élément d'entraînement en forme de plaque (4, 6) entourés par un cadre similaire (1, respectivement 3), tandis que, dans la troisième structure de couche interposée, à l'intérieur d'un cadre similaire (2) sont disposés, d'une part, l'élément en forme de plaque (5) relié à ce cadre et disposé entre les deux éléments d'entraînement en forme de plaques (4, respectivement 6) et, d'autre part, sans liaison mécanique avec ce cadre (2), le support intermédiaire (10) comblant l'intervalle entre les supports (9, respectivement 11).

**6.** Capteur micromécanique de vitesse de rotation selon la revendication 5, **caractérisé en ce que**, dans la direction des deux supports (9, respectivement 11), le support intermédiaire (10) coïncide en dimensions avec ceux-ci, de sorte qu'il n'existe pas de chevauchement de surfaces avec les oscillateurs superposés (7, respectivement 8).

**7.** Capteur micromécanique de vitesse de rotation selon une des revendications précédentes, **caractérisé en ce que** les supports (9, 11) sont reliés au cadre associé (1, respectivement 3) par l'intermédiaire d'un ressort de torsion, de préférence conformé en pivot à lames flexibles.

**8.** Capteur micromécanique de vitesse de rotation selon une des revendications précédentes, **caractérisé en ce que** chacun des éléments d'entraînement en forme de plaques (4, respectivement 6) est relié au cadre associé (1, respectivement 3) par l'intermédiaire de ressorts de flexion (19, respectivement 20).

**9.** Capteur micromécanique de vitesse de rotation selon la revendication 7, respectivement 8, **caractérisé en ce que** chacun des oscillateurs (7, respectivement 8) est relié par l'intermédiaire de ponts élastiques (15, 17, respectivement 16, 18), d'une part, au support associé (9, respectivement 11) et, d'autre part, à l'élément d'entraînement en forme de plaque associé (4, respectivement 6).

# FIG.1

FIG.2

FIG.3

EP 1 090 271 B1

FIG.4

FIG.5

11

# FIG.6
## STAND DER TECHNIK